# EUROPEAN PATENT APPLICATION

(11) **EP 4 684 897 A1**
(43) Date of publication of application: **28.01.2026**
(21) Application number: 25188217.1
(22) Date of filing: 08.07.2025
(51) Int. Cl.: B22F 10/28, B22F 10/31, B22F 12/45, B29C 64/153, B33Y 10/00, B33Y 30/00, B22F 12/30, B22F 10/66, B33Y 40/20

(54) **METHOD OF MANUFACTURE AND APPARATUS THEREFOR**

(30) Priority: 24.07.2024 GB 202410837
(71) Applicant: Rolls-Royce plc, London N1 9FX (GB)
(72) Inventor: Jackson-Clarke, Dene, Derby, Derbyshire DE24 8BJ (GB); Lyon, Stephen P., Derby, Derbyshire DE24 8BJ (GB)
(74) Representative: Rolls-Royce plc

(57) **Abstract**

A method of forming a plurality of components on a build-plate, the method comprising the steps of providing a forming system comprising a plurality of high-energy beam generators mounted on a common support and configured to direct energy onto the build-plate; the build-plate comprising at least one segregation zones segregating the build plate into a plurality of build zones, each build zone associated with one of the high-energy beam generators; forming within each build zone at least one datum from material melted by energy from its associated high-energy beam generator; and forming within each build zone at least one component from material melted by energy from its associated high-energy beam generator; cutting or machining the build plate at the segregation zone or segregation zones to separate the build zones.

## Description

### CROSS REFERENCE TO RELATED APPLICATIONS

This represents the first application directed towards the subject-matter.

### FIELD

The disclosure relates to additive manufacturing techniques, in particular, to additive manufacturing of metallic and/or alloy components. The disclosure relates to additive manufacturing apparatus.

### BACKGROUND

The disclosure relates to additive manufacturing techniques, in particular, to additive manufacturing of alloy and/or metallic components.

Additive manufacturing generates three-dimensional structures through addition of material layer-by-layer or volume-by-volume to form the structure, rather than removing material from an existing volume. Additive manufacturing may be advantageous in many situations, such as rapid prototyping, forming components with complex three-dimensional structures, or the like.

In some examples, additive manufacturing may include fused deposition modelling, in which heated material, such as polymer, is extruded from a nozzle and cools to be added to the structure, or stereolithography, in which an energy source is used to selectively cure a liquid photopolymer resin to a desired shape of the component.

In some examples, additive manufacturing may include blowing a metal powder into a melt pool generated by a laser or other high energy source that traverses over a surface. The powder melts in the melt pool and then solidifies to leave a deposit with a height onto which further layers may be formed.

In some examples, additive manufacturing may include melting metal from a rod or wire into a melt pool generated by a laser or other high energy source that traverses over a surface. The metal then solidifies to leave a deposit with a height onto which further layers may be formed.

In some examples, additive manufacturing may include providing a layer of powder on a substrate. A laser or other high energy source traverses over the layer of powder to selectively melt portions. Further layers of powder may be applied and melted onto the previously processed layer to form the desired component.

In production environments where it is desirable to build multiple copies of the same component it is possible to associate multiple energy sources and/or deposition apparatus with a common traversal actuator. The traversal actuator is provided to ensure that each of the high energy sources and/or deposition apparatus move simultaneously in a common manner with each of the high energy sources and/or deposition apparatus building its respective copy. Multiple energy sources may be provided to form separate components onto a common substrate. These energy sources may be moved independently of each other.

A significant amount of time may be required to adjust the set up of each of the high energy sources and / or material supply to ensure that the incident location of each of the high energy sources on the build surface is accurately known.

### SUMMARY

According to an aspect there is provided a forming system comprising a build plate and a plurality of high-energy beam providers configured to direct energy onto the build-plate;
the build-plate comprising at least one segregation zone segregating the build plate into a plurality of non-overlapping build zones with each zone having a boundary;
each build zone associated with one of the high-energy beam providers and having within its bounds at least one datum provided by a material melted by energy from its associated high-energy beam provider and at least one component provided by a material melted by energy from its associated high-energy beam provider.

Each high-energy beam provider may generate a laser beam, electron beam or other high-energy beam capable of melting the material used to form the one or more datums and the one or more articles.

Each high-energy beam provider may comprise a mirror or other reflecting device to reflect a laser beam, electron beam or other high-energy beam capable of melting the material used to form the one or more datums and the one or more articles.

Each high energy beam provider may be mounted on a common support.

The common support may be a bar or frame to which the high-energy beam providers are clamped, bolted or otherwise secured. The high-energy beam providers may be mounted to the common support in a linear array or in a matrix array.

The common support may be connected to a traversal actuator that is able to move the high-energy beam providers in one dimension. The common support may be connected to a traversal actuator that is able to move the high-energy beam providers in two dimensions. The common support may be connected to a traversal actuator that is able to move the high-energy beam providers in three dimensions.

The bounds of each build zone define an area at a surface of the build plate. The area of each build zone may be defined by the maximum traversal area of a high-energy beam relative to the build plate from the associated high-energy beam provider. The area of each build zone may be defined by a proportion of the maximum traversal area of a high-energy beam relative to the build plate from the associated high-energy beam provider.

The horizontal location of each build zone may vary as the vertical spacing from the build plate increases.

The datum may be cuboid. The datum may be conical. The datum may be pyramidical. There may be three or more datums formed within each build zone.

The material may be a plastic. The material may be metallic. The material may be a metallic alloy.

The material may be in powder form prior to melting. The material may be in the form of a wire prior to melting. The material may be delivered into the high energy beam. The material may be delivered into a pool melted the high energy beam. The material may be provided as a layer of powder to which the high-energy beam is directed.

The segregation zone may be defined as a region between adjacent build zones. The segregation zone may be sufficiently large to facilitate physical separation of the build plate at the segregation zone.

The segregation zone may comprise a frangible feature within the base plate. The frangible feature may be an elongate notch. The frangible feature may be series of perforations.

The forming system may further comprise a separator for separating the plurality of build zones at the separation zone.

The separator may comprise a band-saw. The separator may comprise an electro discharge machine. The separator may comprise a milling machine. The separator may comprise a welding torch.

The forming system may further comprise an alignor configured to align one or more of the datums to the separator. The alignor may comprise a complementary feature to the datums.

The alignor may be configured to present a surface of the build-plate to the separator, wherein the presented surface is a different surface to a surface of the build-plate having the datums and the components. The different surface may be the reverse surface of the build-plate to the surface of the build-plate having the datums and the components.

According to an aspect there is provided a method of forming a plurality of components on a build-plate, the method comprising the steps of providing a forming system comprising a plurality of high-energy beam providers configured to direct energy onto the build-plate;
the build-plate comprising at least one segregation zones segregating the build plate into a plurality of non-overlapping build zones, each build zone associated with one of the high-energy beam generators;
forming within the bounds of each build zone at least one datum from material melted by energy from its associated high-energy beam generator; and
at least one component from material melted by energy from its associated high-energy beam generator;
cutting or machining the build plate at the segregation zone or segregation zones to separate the build zones.

The bounds of each build zone define an area at a surface of the build plate. The area of each build zone may be defined by the maximum traversal area of a high-energy beam relative to the build plate from the associated high-energy beam provider. The area of each build zone may be defined by a proportion of the maximum traversal area of a high-energy beam relative to the build plate from the associated high-energy beam provider.

The step of forming each datum may comprises the step of simultaneously moving each high-energy beam generator relative to its build zone and applying energy to material to form the datum. The step of forming each component comprises the step of simultaneously moving each high-energy beam generator relative to its build zone and applying energy to material to form the components. The high-energy beam generators may be mounted on a common support.

The step of forming each datum may comprises the step of independently moving each high-energy beam generator relative to its build zone and applying energy to material to form the datum.

Each build zone may comprise at least one identical component.

The cutting or machining may be provided by a device aligned to the segregation zone by one or more of the datums.

The method may present a surface of the build-plate to the cutting or machining device that is a different surface to that of the build-plate having the datums and the components.

Following separation of the build zones the at least one datum formed on that build zone may be used to locate the at least one component of that build zone for at least one subsequent process.

The at least one subsequent process may be selected from a group comprising: measurement, heat treatment, drilling, cleaning, polishing, and testing.

### BRIEF DESCRIPTION OF THE DRAWINGS

Embodiments will now be described by way of example only with reference to the accompanying drawings, in which:
FIG. 1 shows a side view of a powder bed additive manufacture system;
FIG. 2 shows alternative views of the powder bed system of Fig. 1
FIG. 3 shows a build-plate for an additive manufacture system;
FIG. 4 depicts a top view of an additive manufacture system;
FIG. 5 depicts a perspective view of a series of components manufactured in an additive manufacture system
FIG. 6 depicts an alternative segregation zone arrangement.
FIG. 7 depicts an alternative segregation zone arrangement.

### DETAILED DESCRIPTION

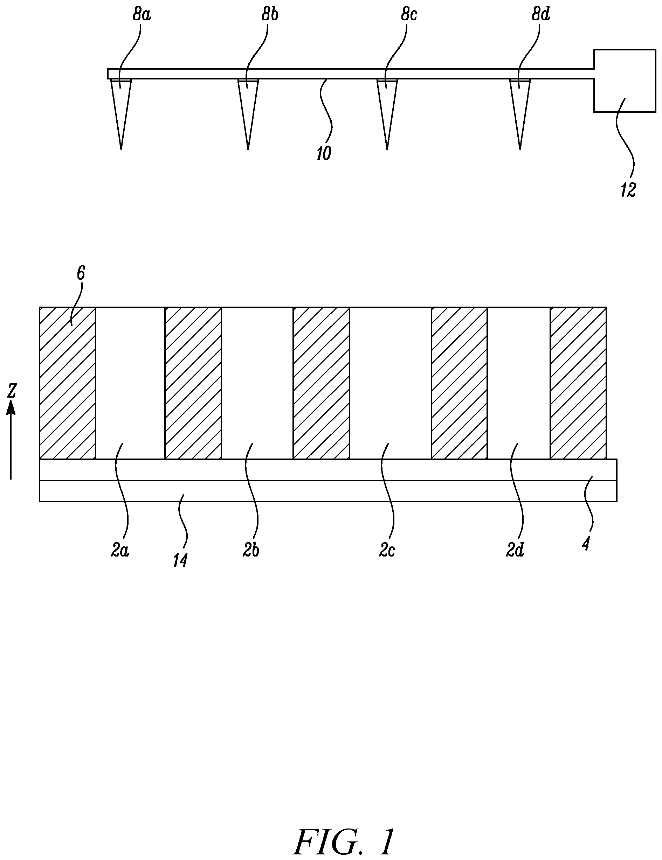

Figure 1 depicts a cross-section through an additive manufacturing apparatus where multiple identical parts 2a, 2b, 2c, 2d are built onto a substrate 4. The additive process is a powder bed process where the parts are formed within a bed of powder 6 that is melted and fused by multiple lasers 8a, 8b, 8c, 8d which are mounted to a common carrier 10 the relative movement of which is controlled by an actuator 12. In an alternative arrangement the lasers independently directed to the substrate through galvo controlled mirrors rather than all being controlled centrally - i.e. each laser can move independently of all of the others.

In the process the substrate 4 is first built or mounted to a build chamber plate 14. A layer of powder 6 is added to the build chamber plate 14 and subsequently levelled using a leveller (not shown). The leveller a bar or other mechanical device which passes over the deposited layer to ensure a consistent surface is presented to the laser. The actuator 12 moves the common carrier 10 thereby causing identical traverse of each of the lasers relative to the substrate. The lasers apply energy to the powder to selectively melt regions thereof to build a layer of the parts 2a, 2b, 2c, 2d.

The build chamber plate indexes away from the lasers and a new layer of powder applied to the previously applied layer, which includes the melted regions. The process of melting, indexing and application of new powder is repeated until the parts 2a, 2b, 2c and 2d are built.

Once all parts are built the substrate 4 is removed from the build plate and the unmelted powder 6 removed to expose the parts. The parts may undergo treatment either before or after separation from the substrate. Whilst it may be possible to treat all parts together on a unitary substrate it may be more desirable to separate the substrate 4 into multiple sections with each section carrying multiple parts.

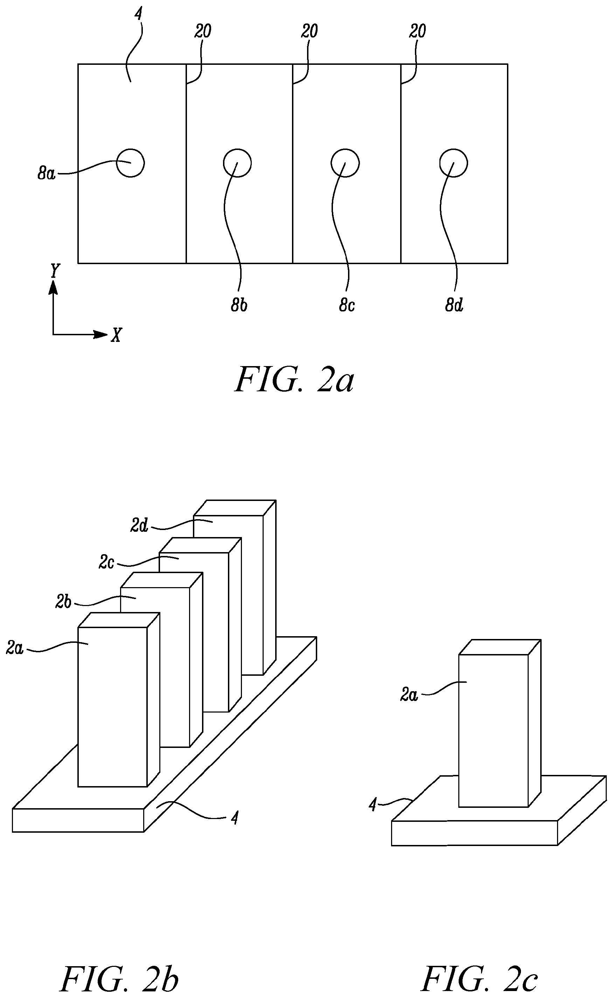

Figure 2 depicts a substrate 4 intended to be divided into four separate units along lines 20. Figure 2(a) is a plan view of the substrate which also depicts an exemplary location of the lasers 8a, 8b, 8c and 8d. Figure 2(b) depicts a perspective view of a substrate unit carrying four built parts 2a, 2b, 2c and 2d. Figure 2(c) is a perspective view of one component on a substrate unit.

Each laser is associated with one of the substrate units and is used to build each of the parts on that unit. The substrate is sufficiently robust such that excessive distortion is not observed when the parts undergo heat treatment or other post processing actions but particularly to avoid distortion during formation of the parts when significant localised heat is applied by the lasers. This inevitably results in significant weight when the substrates are large, possibly up to 850mm x 850mm though, more regularly up to 450mm by 450mm. By subdividing the substrate into units it facilitates movement of the units and their built parts by the operators building the parts.

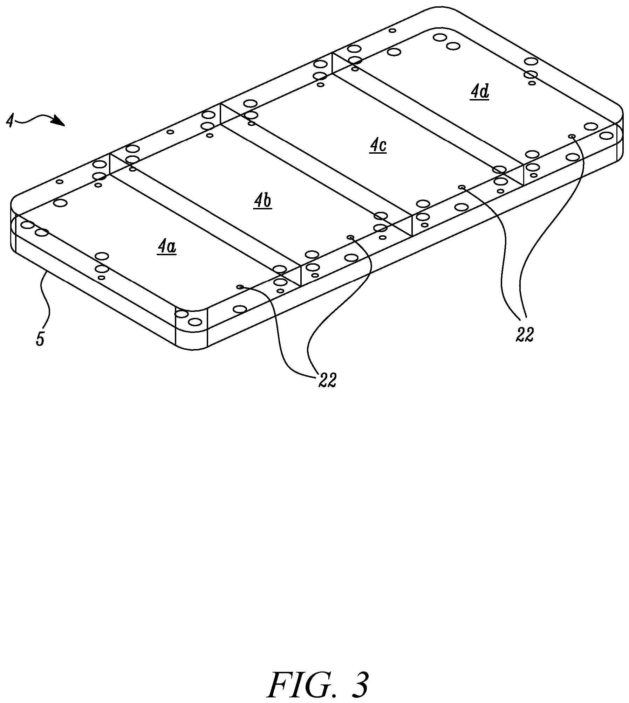

As shown in Figure 3 additional stiffness of the substrate may be achieved by forming it as multiple layers. A sub-plate 5 is provided with multiple threaded bolt holes into which bolts are inserted to securely attach each unit 4a, 4, 4c, 4d. Dowels 22, or other alignment features, may be provided to more accurately align the units relative to the sub-plate.

The sub-plate is bolted to the ALM machine using provided bolt holes and features may be provided that facilitate lifting of the sub plate onto the ALM machine.

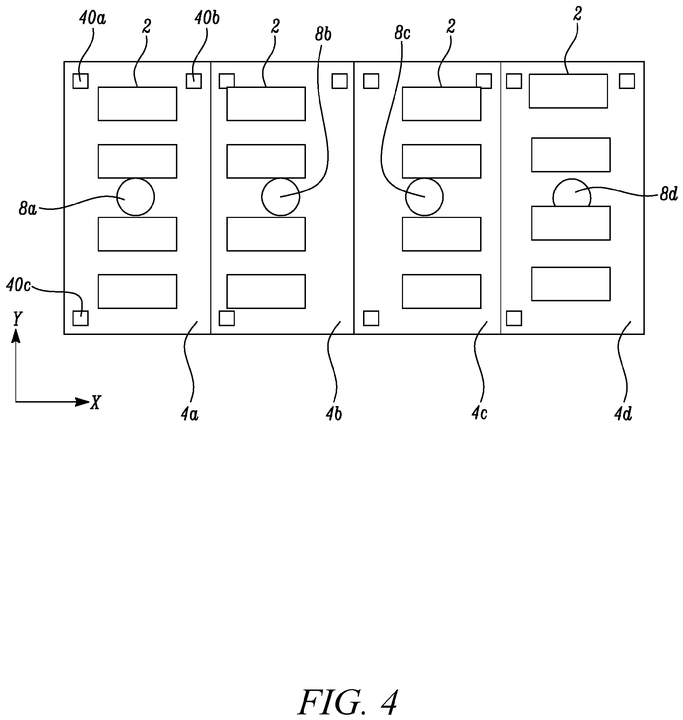

Where multiple lasers are used to form components it is found that there can be differences in the positions of the formed parts relative to the sides of the substrates. For example, in Figure 4, the parts formed on unit 4a by laser 8a are centrally located. On unit 4b the parts 2 are offset to the left of those in unit 4a. On unit 4c the parts 2 are offset to the right of those on unit 4a. On unit 4d the parts 2 are offset slightly higher than those on unit 4a.

In conventional multipart builds a significant amount of time is taken to ensure these alignment discrepancies do not arise by repeatedly checking each laser against a known alignment feature (not shown) and adjustments made to ensure that, if required, the lasers are realigned to the alignment feature.

To mitigate this requirement multiple datums 40a, 40b, 40c are provided on baseplate 4a using laser 8a before, simultaneously, or after part 2 is formed. Datums are also provided on baseplates 4b, 4c and 4d using the respective laser 8b, 8c and 8d. Accordingly, each set of parts is located on a portion of the base plate where the parts and the datums are manufactured by the same laser apparatus and are in the same relative alignment to each other regardless of the relative alignment of datum and parts formed by another one of the lasers.

The datums may be cubic, cylindrical, pyramidical or conical in shape. The datums may be formed to provide an inverse cubic, cylindrical, pyramidical or cone shape i.e. a body of material is built up with a recess in the shape of a cube, pyramid, cylinder or cone. The datums may be used to help find the parts in a downstream probing process using an alignor 62 for example in a Coordinate Measurement Machine (CMM) or other digital scanner. The datums may be used for clamping with the benefit that if the position of the datum is known then the position of the parts is similarly known.

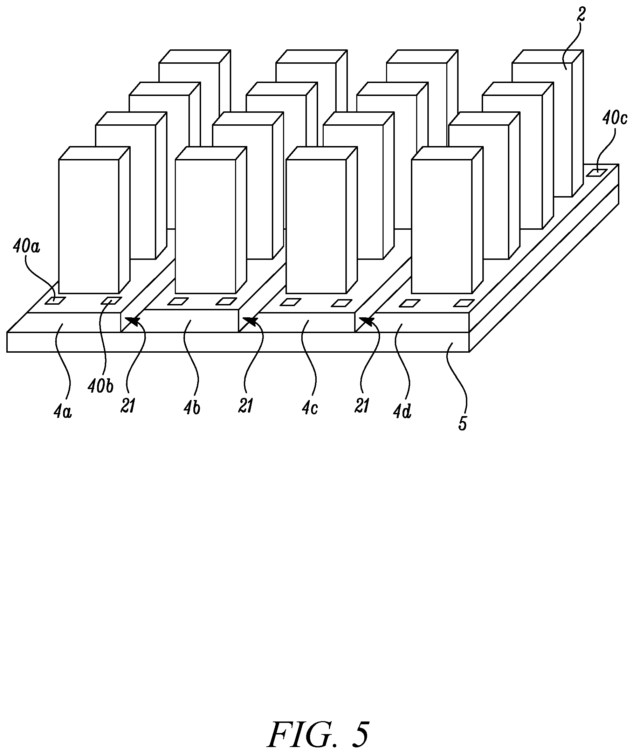

Once the parts and the datums are formed it is necessary to remove the build-plate 4 from the sub-plate 5 and then to separate each build-plate from each other. A separator 60 may be used and/or, as shown in Figure 5 it is possible to provide the build-plate with frangible zones 21 that facilitate breakage along line 20 (Fig. 2). In the figure the frangible zone is a linear notch open at its upper face however other forms may be appropriate. For example the notch may be inversed or may comprise a series of perforation-like-slots along line 20.

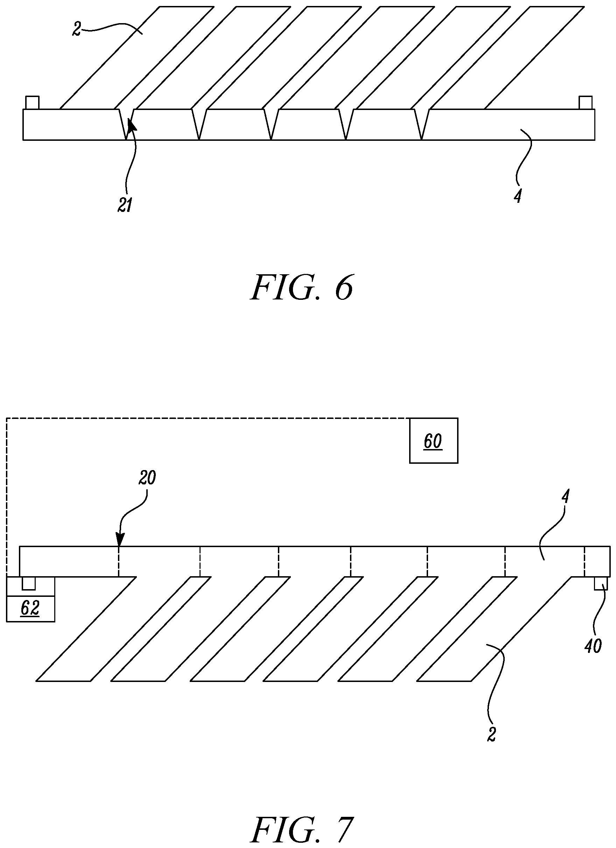

The frangible zones 21 may be used to facilitate higher manufacturing density particularly where the manufactured parts 2 have an upper region distal from the build-plate that is spaced horizontally from a lower region proximal to the build-plate. In some arrangements the distal end is displaced so far horizontally from the proximal end that it shields the separation line 20 between adjacent build plate portions as shown in Figure 6. The splitting operation of adjacent build-plate portions by the separator 60 is facilitated by removing the need for 'line of sight' from above that is required by some cutting machines e.g. bandsaws, Electro Discharge Machining (EDM), milling cutters or similar.

Even where the build-plate is not provided with frangible zones the manufactured datums may facilitate separation of the built-plate by allowing the reverse surface of the build-plate 4 to be presented to a separator 60 e.g. a line-of-sight cutting machine as shown in Figure 7. The accuracy of the datums relative to the manufactured parts ensures that the parts are not damaged in the separation process and ensures part build to a higher part density per substrate. Where distortion in the base plate is observed following a heat treatment process it is still possible to locate the parts to within 0.1mm using the datum features.

As mentioned earlier the ability to build multiple components on a single build-plate and the sub divide into smaller units may offer enhanced health and safety benefits for operators and easier handling whilst continuing to permit high density manufacture.

### Description heading

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A forming system comprising a build plate (4) and a plurality of high-energy beam providers (8a, 8b, 8c, 8d) configured to direct energy onto the build-plate;
the build-plate (4) comprising at least one segregation zone (20) segregating the build plate into a plurality of non-overlapping build zones (4a, 4b, 4c, 4d) with each zone having a boundary;
each build zone associated with one of the high-energy beam providers and having within its bounds at least one datum (40a, 40b, 40c) provided by a material melted by energy from its associated high-energy beam provider and at least one component (2) provided by a material melted by energy from its associated high-energy beam provider.

2. A forming system according to claim 1 wherein each high-energy beam provider is a laser generator or a controllable mirror reflecting a high-energy beam.

3. A forming system according to any preceding claim, wherein the segregation zone comprises a frangible feature (21).

4. A forming system according to claim 3, wherein the frangible feature is an elongate notch or perforation.

5. A forming system according to any preceding claim, wherein the forming system further comprises a separator (60) for separating the plurality of build zones at the segregation zone.

6. A forming system according to claim 5, wherein the separator (60) comprises a band-saw, an electro discharge machine, miller, or welding torch.

7. A forming system according to claim 5 or claim 6, wherein the forming system further comprises an alignor (62) configured to align one or more of the datums to the separator.

8. A forming system according to claim 7, wherein the alignor (62) comprises a complementary feature to the datums.

9. A forming system according to claim 7 or claim 8, wherein the alignor (62) is configured to present a surface of the build-plate to the separator, wherein the presented surface is a different surface to a surface of the build-plate having the datums and the components.

10. A method of forming a plurality of components on a build-plate (4) , the method comprising the steps of providing a forming system comprising a plurality of high-energy beam providers (8a, 8b, 8c, 8d) configured to direct energy onto the build-plate;
the build-plate comprising at least one segregation zones (20) segregating the build plate into a plurality of non-overlapping build zones (4a, 4b, 4c, 4d), each build zone associated with one of the high-energy beam providers;
forming within the bounds of each build zone at least one datum (40a, 40b, 40c) from material melted by energy from its associated high-energy beam provider; and
forming within the bounds of each build zone at least one component (2a, 2b, 2c, 2d) from material melted by energy from its associated high-energy beam provider;
cutting or machining the build plate at the segregation zone or segregation zones to separate the build zones.

11. A method according to claim 12, where in the step of forming each datum (40a, 40b, 40c) and the step of forming each component comprises the step of simultaneously moving each high-energy beam provider relative to its build zone (4a, 4b, 4c, 4d) and applying energy to material to form the datums and components.

12. A method according to any one of claims 10 to 11, wherein the cutting or machining is provided by a device aligned to the segregation zone by one or more of the datums.

13. A method according to claim 12, wherein a surface of the build-plate is presented to the cutting or machining device that is a different surface to that of the build-plate having the datums and the components.

14. A method according to any one of claims 10 to claims 13, wherein following separation of the build zones the at least one datum formed on that build zone is used to locate the at least one component of that build zone for at least one subsequent process.

15. A method according to claim 14, wherein the at least one subsequent process is selected from a group comprising: measurement, heat treatment, drilling, cleaning, polishing, and testing.
